# EUROPEAN PATENT APPLICATION

(11) **EP 1 380 545 A1**
(43) Date of publication of application: **14.01.2004**
(21) Application number: 03102086.0
(22) Date of filing: 10.07.2003
(51) Int. Cl.: C02F 3/20, C02F 3/06

(54) **Wastewater treatment unit**

(30) Priority: 12.07.2002 FI 20021374
(71) Applicant: Uponor Innovation AB, 513 18 Fristad (SE)
(72) Inventor: O'Neill, Stephen, 51332, Fristad (SE); Tast, Niila, 15270, Kukkila (FI); Bolle, Stefan, 46562, Voerde (DE); Lindner, Thomas, 45896, Gelsenkirchen (DE)
(74) Representative: Huhtanen, Ossi Jaakko

(57) **Abstract**

A wastewater treatment unit that comprises a chamber (6) for aerobic treatment of wastewater. The chamber (6) for aerobic treatment of wastewater has an aerator (11). The aerator (11) is replaceable sidewise through a wall of the chamber (6) for aerobic treatment of wastewater. When the aerator (11) is replaced, it is not necessary to touch the fixed bed (10) that is possibly located in the chamber (6).

## Description

### FIELD OF THE INVENTION

The invention relates to a wastewater treatment unit that comprises a chamber for aerobic treatment of wastewater, the chamber for aerobic treatment of wastewater having an aerator.

### BACKGROUND OF THE INVENTION

A wastewater treatment unit typically comprises a preliminary sedimentation chamber, a chamber for aerobic treatment of wastewater, and a secondary sedimentation chamber. The chamber for aerobic treatment of wastewater has an aerator. A fixed bed with water purifying microbes is typically located above the aerator. This type of a wastewater treatment unit is disclosed in DE publication 3,837,852, for instance. The maintenance and replacement of the aerator is in such a solution very difficult. So as to reach the aerator, it is necessary to remove the fixed bed, which is a very difficult and dirty task. In addition, removing and cleaning the fixed bed clearly weakens the operation of the wastewater treatment unit, because it takes time before enough microbes have re-grown in the cleaned fixed bed to provide an efficient operation of the wastewater unit.

### BRIEF DESCRIPTION OF THE INVENTION

It is an object of the present invention to provide an improved wastewater treatment unit.

The wastewater treatment unit of the invention is characterized in that the aerator can be replaced sidewise through a wall of the chamber for aerobic treatment of wastewater.

The essential idea of the invention is that the wastewater treatment unit has a chamber for aerobic treatment of wastewater, and the chamber for aerobic treatment of wastewater has an aerator. The aerator can be replaced sidewise through the wall of the chamber. The chamber for aerobic treatment of wastewater preferably has a fixed bed, below which the aerator is arranged, and the aerator can be replaced without essentially touching the fixed bed. Most preferably, the aerator is tubular and fastened to the wall by means of a sleeve, whereby the sleeve is arranged in an opening in the wall and the aerator can be replaced through this opening.

The invention provides the advantage that the maintenance and replacement of the aerator is easy and fast. There is no need to touch the possible fixed bed, and consequently the aerator can be serviced and replaced without disturbing the microbes on the fixed bed. The maintenance and replacement of the tubular aerator is very easily and quickly accomplished by means of the sleeve in the opening of the wall. This type of a solution is also simple in structure, and the sealing of the lead-through in the wall is easy to make.

### BRIEF DESCRIPTION OF THE FIGURES

The invention is described in more detail in the attached drawings, in which
Figure 1 is a schematic cross-sectional side view of a wastewater treatment unit, and
Figure 2 is a schematic cross-sectional side view of a detail of the solution in Figure 1.

### DETAILED DESCRIPTION OF THE INVENTION

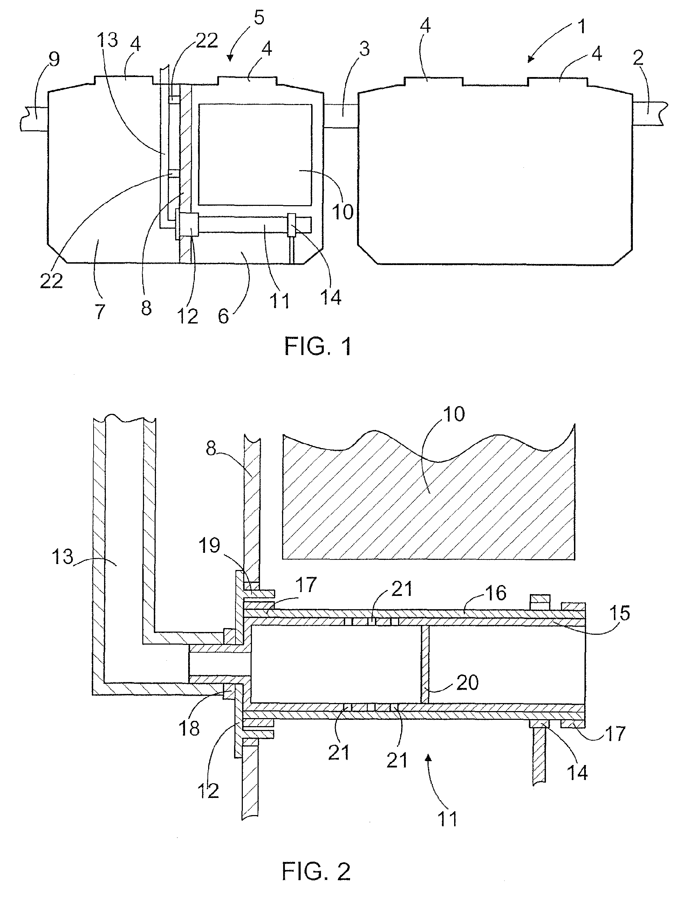

Figure 1 shows a wastewater treatment unit comprising a first tank 1 that constitutes a preliminary sedimentation chamber. Wastewater enters the first tank 1 through an inlet pipe 2. In the first tank 1, the solids in the wastewater form sedimentation at the bottom of the tank 1 and the clarified wastewater continues on though a connecting pipe 3. The tank 1 also has one or more manholes 4, through which the tank 1 can be cleaned, serviced and emptied.

Through the connecting pipe 3, the wastewater enters a second tank 5. The second tank has a chamber 6 for aerobic treatment of wastewater and a secondary sedimentation chamber 7. The chamber 6 for aerobic treatment of wastewater and the secondary sedimentation chamber 7 are separated from each other by a partition wall 8. The partition wall 8 has an opening or openings in a manner known per se to allow the aerobically treated wastewater to move from the chamber 6 to the secondary sedimentation chamber 7. From the secondary sedimentation chamber 7, the purified wastewater is discharged through a discharge pipe 9. The wastewater treatment unit can also be constructed in such a manner that the different chambers are in one tank. There may also be more tanks and/or chambers than shown in Figure 1. Further, one tank can also form one chamber in such a manner that one tank forms the chamber for aerobic treatment of wastewater.

The chamber 6 for aerobic treatment of wastewater has a fixed bed 10 with wastewater purifying microbes, such as bacteria. The fixed bed 10 has a grid or frame made of plastic, such as polyethylene PE, or some other suitable material, on the surface of which microbes can grow. One or more aerators 11 are located below the fixed bed 10. The aerator 11 produces air bubbles in the bottom part of the chamber 6 that rise upward through the fixed bed 10. This provides oxygen for the microbes, and the fixed bed also provides an extensive contact surface for the water being purified and the bacteria.

The aerator 11 is arranged to a sleeve 12 and the sleeve 12 is arranged through an opening in the partition wall 8. Air for the aerator 11 is supplied through an aerator pipe 13. The aerator pipe 13 can be fastened to the partition wall 8, for instance, by means of fastening devices 22. The tail end of the tubular aerator 11 can be supported to a horizontal position by means of supports 14, for instance. The support 14 can be fastened either to the body of the tank 5 or to the fixed bed 10. The support 14 can comprise for instance a ring having a larger diameter than that of the aerator 11, and a support pin for fastening the ring in place.

Figure 2 shows the aerator 11 in more detail. The aerator 11 comprises a pipe 15, which is preferably made of plastic, such as polyethylene PE. The pipe 15 is covered by an elastic rubber layer 16. The sides of the rubber layer 16 that are against the pipe 15 have holes, slots or cracks. The rubber layer 16 is at its forward and tail ends fastened tightly against the pipe 15 by a fastening hoop 17. When the pressure inside the pipe 15 is not higher than the pressure in the tank 6, the rubber layer 16 is pressed against the pipe 15, and the holes or openings of the rubber layer 16 are closed. Approximately halfway along the pipe 15, there is a plate 20 inside the pipe 15 that stops air from flowing to the tail end of the pipe 15. The wall of the pipe 15 at the forward end has openings 21, through which air can flow. When air is blown through the aerator pipe 13 inside the pipe 15 and the pressure rises enough, air enters through the openings 21 in the wall of the pipe 15 between the pipe 15 and the rubber layer 16 distending the rubber layer 16. The holes in the rubber layer 16 then expand and air enters as bubbles into the chamber 6.

The pipe 15 is fastened tightly to the sleeve 12 by a nut 18. There may be a sealing 19 between the sleeve 12 and the partition wall 8. There may also be a sealing between the pipe 15 and the sleeve 12 and in connection with the aerator pipe 13.

The aerator 11 is replaced by detaching the aerator pipe 13 from the aerator 11. After this, the sleeve 12 is detached from the opening in the partition wall 8, and the aerator 11 is pulled out together with the sleeve 12 from the chamber 6. After this, the aerator 11 is serviced or replaced or a part of it is replaced, and the aerator 11 is then re-fastened to the sleeve 12. Next, the aerator 11 is pushed through the opening in the partition wall 8 and fastened by means of the sleeve 12 back in place. This way, the aerator 11 is replaced sideways and the replacement of the aerator 11 does not in any way disturb the microbes on the fixed bed 10, because there is no need to touch the fixed bed 10. Further, the fixed bed 10 need not be removed to replace the aerator 11.

The drawing and the related description are only intended to illustrate the idea of the invention. The invention may vary in detail within the scope of the claims. Thus, the aerator 11 can be of another kind than tubular. The aerator 11 can for instance be a disc-like nozzle or of a corresponding structure. This type of an aerator can be replaced sideways through a hatch made in the partition wall 8, for instance. Typically a wastewater treatment unit is installed underground, in which case the replacement of the aerator is easiest performed via the neighbouring chamber through the partition wall between the chambers. In some cases, however, for instance the chamber for aerobic treatment of wastewater can be installed above ground, in which case the aerator can be replaced sidewise from outside the tank or chamber through the outer wall of the tank or chamber.

## Claims

1. A wastewater treatment unit that comprises a chamber (6) for aerobic treatment of wastewater, the chamber (6) for aerobic treatment of wastewater having an aerator (11), **characterized in that** the aerator (11) is replaceable sidewise through a wall of the chamber (6) for aerobic treatment of wastewater.

2. A wastewater treatment unit as claimed in claim 1, **characterized in that** the wastewater treatment unit comprises a chamber (7) adjacent to the chamber (6) for aerobic treatment of wastewater, the two chambers (6, 7) being separated by a partition wall (8), and that the aerator (11) is replaceable sidewise via the chamber (7) adjacent to the chamber (6) for aerobic treatment of wastewater through the partition wall.

3. A wastewater treatment unit as claimed in claim 1 or 2, **characterized in that** the chamber (6) for aerobic treatment of wastewater has a fixed bed (10), below which the aerator (11) is arranged, and that the aerator (11) is replaceable without essentially touching the fixed bed (10).

4. A wastewater treatment unit as claimed in any one of the preceding claims, **characterized in that** the aerator (11) is tubular.

5. A wastewater treatment unit as claimed in claim 4, **characterized in that** the aerator (11) is fastened to the wall by means of a sleeve (12), whereby the sleeve (12) is arranged in an opening in the wall, and the aerator (11) is replaceable through this opening.
